# EUROPEAN PATENT SPECIFICATION

(11) **EP 4 054 334 B1**
(45) Date of publication and mention of the grant of the patent: **30.07.2025**
(21) Application number: 20811119.5
(22) Date of filing: 06.11.2020
(51) Int. Cl.: A01N 31/02, A01N 59/00, A01N 63/50, A01N 37/36, A01P 15/00

(54) **COMPOSITIONS, USES AND METHODS FOR PREVENTION AND TREATMENT OF VIRAL PLANT INFECTIONS**
ZUSAMMENSETZUNGEN, VERWENDUNGEN UND VERFAHREN ZUR VORBEUGUNG UND BEHANDLUNG VON VIRUSINFEKTIONEN BEI PFLANZEN
COMPOSITIONS, UTILISATIONS ET PROCÉDÉS POUR LA PRÉVENTION ET LE TRAITEMENT D'INFECTIONS VIRALES DE PLANTES

(30) Priority: 06.11.2019 NL 2024170
(43) Date of publication of application: 14.09.2022
(73) Proprietor: HW Innovations B.V., 9672 BH Winschoten (NL)
(72) Inventor: VAN DER WINDT, Arie-Dirk, 9665 BN Oude Pekela (NL)
(74) Representative: V.O.
(86) International application number: PCT/NL2020/050697
(87) International publication number: WO 2021/091384

(56) References cited:
- EP-A1- 0 358 500
- G. KAMPF: "Efficacy of ethanol against viruses in hand disinfection", JOURNAL OF HOSPITAL INFECTION, vol. 98, no. 4, 1 April 2018 (2018-04-01), AMSTERDAM, NL, pages 331 - 338, XP055714645, ISSN: 0195-6701, DOI: 10.1016/j.jhin.2017.08.025

## Description

The invention relates to prevention of viral infection in plants, including vegetable and ornamental crops. In particular, the invention provides compositions and uses thereof which may be applied as a disinfectant to prevent or limit the spread of plant viruses, specifically tobamoviruses, as well as methods for its preparation and use.

Plants are susceptible to a variety of diseases induced by viral infection. Of particular economic importance are viruses of the Tobamoviruses genus, which belongs to the *Virgaviridea* family and includes for example Tobacco Mosaic Virus, Tomato Mosaic Virus and Pepper Mild Mottle Virus. These plant viruses negatively affect production of various vegetable and ornamental crops worldwide, causing significant losses to growers. Tomato plants (Solanaceae family) and cucumber, melon and watermelon plants (Curcubitaceae family) are amongst the most severely affected crops, but for instance also pepper and tobacco plants may be affected.

Tobamoviruses are remarkably stable outside their plant host and may remain infectious for months to years in soil; on surfaces, e.g. on tools, clothes, benches; and in seeds. Tobamoviruses are mechanically transmitted in infected plant sap. Therefore, these viruses easily spread in a commercial production facility like a greenhouse through standard production practices like transplanting, pruning, tying, and harvesting. Tobamoviruses can generally also be transmitted via seed and by adhering to pollinators, like bumblebees, used in commercial production.

In order to allow growers to obtain good yields despite the presence of tobamoviruses, resistance genes have been identified and bred into suitable plant varieties. However, the recently identified Tomato brown rugose fruit virus (ToBRFV) is a tobamovirus which breaks the resistance of commonly used resistance genes, including *Tm-2²* (also known as *Tm-2^{a}*)*.* ToBRFV symptoms include necrotic lesions, discoloration and deformation of the fruits, leaving affected fruit unmarketable and resulting in yield losses of 30-70%.

Although mainly causing havoc in commercially grown tomatoes, ToBRFV can also infect pepper plants under natural conditions. Furthermore, inoculation experiments have shown that the virus can in principle also infect tobacco, European black nightshade, certain species of *Chenopodium* and *Chopodiastrum* and petunia.

Possible resistance genes for ToBRFV have been identified (WO 2018/219941 and WO 2019/110821), however, to date no resistant tomato varieties are commercially available. Moreover, it is highly likely that in due time a mutated version of ToBRFV or a new tobamovirus will break through the resistance.

WO 2019/162952 discloses the use of concentrated (> 2 M) phenylalanine solutions to control pathogenic infections in plants. Spraying tomato plants with such concentrated phenylalanine solutions prior to infection, may limit the severity of ToBRFV infection. However, phenylalanine is a known bio-stimulant and regular contact with such high doses is likely to affect plant development.

Current guidelines focus on preventing the virus from spreading by implementing strict sanitation practices. This includes regular disinfection of anything coming into contact with the plants with solutions of household bleach, Virkon S or non-fat skimmed milk. However, such cleansers have never been able to fully inactivate common tobamoviruses and are therefore expected to be of limited use in controlling ToBRFV infections.

Moreover, these cleansers have a significant environmental footprint as well as undesirable side effects. Regular hand washing, particularly with harsh cleansers like bleach and Virkon or allergens contained in dry skimmed milk, is known to cause severe contact dermatitis in workers. Another issue with the use of bleach is that it may do corrosive damage to the greenhouse structure.

The inventors recognized the need for effective and safe strategies that avoid the side effects of commonly used cleansers, to prevent and control the spread of tobamovirus infection. In particular, they set out to develop a mild disinfectant based on natural ingredients which is effective in treating tobamovirus infections, particularly ToBRFV infections, and is safe for use in all sanitation procedures encountered in greenhouse crop farming, including hand washing, cleaning of tools, surfaces and greenhouse structure as well as disinfection of plants, seeds and soil. Preferably, the disinfectant is biodegradable.

It was surprisingly found that incubation of ToBRFV-infected plant material with an acidic aqueous alcoholic solution comprising a cysteine endopeptidase, a hydrochloric acid source, and an acid-dependent protease, greatly reduced the number of infective ToBRFV units. This was reflected by a reduced number of lesions observed following inoculation of plant leaves with treated or untreated TBRF-infected material. For example, an acidic aqueous composition comprising bromelain, betaine HCl and pepsin was shown to fully eradicate infectious virus upon incubation of infected material with the composition. Notably, leaving out one of these ingredients significantly reduced the viricidal effect of the composition. The composition is also effective against Pepper Mild Mottle Virus and Cucumber Green Mottle Mosaic Virus. Hence, it is likely to be effective against a wide range of Tobamoviruses, as well as other plant viruses.
Accordingly, in one embodiment the invention provides an aqueous composition comprising
i) one or more cysteine endopeptidase(s),
ii) one or more acid-dependent digestive protease(s) selected from the aspartic endopeptidases of the pepsin family (EC 3.4.23), and
iii) betaine hydrochloride.

Also provided is the use of such composition to prevent, control or treat a plant disease caused by a plant virus and/or to prevent, control or limit the spread of a plant disease caused by a plant virus. In other embodiments, the invention provides methods for controlling the spread of such a disease by reducing viral populations on surfaces employing a composition as provided herein.

A composition comprising one or more cysteine endopeptidases, betaine hydrochloride as source of hydrochloric acid and one or more acid-dependent digestive proteases of the invention and the use thereof in controlling the spread of plant viruses, particularly tobamoviruses including ToBRFV, is not known or suggested in the art.

Mixtures of various types of proteases and the hydrochloric acid source betaine HCl, along with other ingredients, have been disclosed as digestive aid compositions (US 444,712) and as probiotic formulations (US 6,426,099 B1). Compositions according to these inventions are typically dry, and not suggested to be applied in plant disease control.

WO2013/065439 describes the use of nucleic acid and amino acid fermentation by-products, including betaine and glutamic acid, to control diseases induced by infection with Tobamoviruses or Cucumoviruses in plants. WO2013/065439 does not suggest the use of a protease combination of the present invention, let alone in combination with a source of HCl.

EP 0358500 describes the use of proteases, including bromelain and the serine proteases trypsin and chymotrypsin,to treat an infection with enveloped viruses (e.g. influenza or HIV virus) in a subject or to sterilize or decontaminate food stuffs or surgical devices. It does not suggest using a mixture of a cysteine protease, an aspartic endopeptidase of the pepsin family (EC 3.4.23), and betaine hydrochloric acid in an aqueous composition.

Kampf (J. Hospital Infection 98 (2018), 331-338) describes the efficacy of ethanol against viruses in hand disinfection. It was found that the spectrum of virucidal activity of ethanol at high (>80 % w/w) concentrations covers the majority of clinically relevant viruses. Additional acids such as citric acid could improve the activity against some but not all viruses. Kampf is totally silent on including betaine hydrochloride as hydrochloric acid source, let alone in combination with two specific types of proteases. Moreover, the examples herein below demonstrate that the formation of lesions caused by a plant virus is not prevented by the mere presence of ethanol and citric acid.

Thus, the prior art fails to disclose or suggest a composition comprising the above combination of proteases and hydrochloric acid source in an aqueous solution. Moreover, the use of such a composition to prevent the spread of plant viral infections, particularly of ToBRFV virus, is not encompassed by the literature.
It is demonstrated herein that incubation of virus-infected plant material (or a surface comprising said material) with a composition of the invention reduces the number of infective plant viruses. Accordingly, in one embodiment compositions of the invention may be used to prevent, limit or control the spread of a plant disease caused by a plant virus. In a preferred embodiment, the plant virus belongs to the *Virgaviridae* family, more preferably, the plant virus is a tobamovirus. In a particularly preferred embodiment, the plant virus is Tomato Brown Rugose Fruit Virus (ToBRFV), Pepper Mild Mottle Virus (PMMV), or Cucumber Green Mottle Mosaic Virus.
In a preferred embodiment, a composition of the invention may be used to prevent, limit or control the spread of a plant virus in crop plants. Crop plants include tomato, cucumber, bell pepper, chili pepper, ornamental pepper, melon, watermelon, potato and tobacco. In a preferred embodiment, a composition of the invention is used to prevent or limit the spread of plant viruses in or on a tomato, pepper or cucumber plant, more preferably a tomato plant.
Proteases, also known as endopeptidases, are enzymes that catalyze the breakdown of proteins by hydrolyzing peptide bonds. They can be classified into acid, neutral or basic proteases, based on the pH necessary for optimal activity. They can also be classified into serine proteases, cysteine proteases, threonine proteases, aspartic proteases, glutamic proteases, metalloproteases or asparagine peptide lyases, based on the their catalytic residue and mechanism. For example, trypsin and chymotrypsin are serine proteases, whereas pepsin is an aspartic protease.
A composition according to the invention comprises the combination of two defined types of proteases: one or more cysteine endopeptidase(s) and one or more acid-dependent aspartic endopeptidase(s) of the pepsin family (EC 3.4.23).
A composition according to the invention comprises at least one cysteine endopeptidase. In one embodiment, a composition comprises a mixture of two or more cysteine endopeptidases.

Cysteine endopeptidases are proteases that catalyze the hydrolysis of peptide bonds *via* a mechanism involving a nucleophilic cysteine thiol and are therefore also referred to as thiol proteases. Although widespread in all four kingdoms as well as in viruses, they are particularly abundant in plants, where they are important in growth and development and in accumulation and mobilization of storage proteins such as in seeds. In addition, they are involved in signaling pathways and in the response to biotic and abiotic stresses.

Plant cysteine endopeptidases, including bromelain, papain and ficain may be used as a digestive aid and are often used to tenderize meat. They have also been proposed to be useful in a debridement solution to remove damaged tissue from chronic wounds (e.g. US 2013/0156745 A1).

A cysteine endopeptidase may suitably be selected from the C1 family of cysteine endopeptidases. This family includes, amongst others, ficain (EC 3.4.22.3), papain (EC3.4.22.2) and bromelain (EC 3.4.22.32). In one embodiment, a composition of the invention comprises a C1 cysteine endopeptidase originating from a plant. For example, the C1 cysteine endopeptidase may be a C1 cysteine endopeptidase found in banana, fig, kiwifruit, mango, papaya or pineapple or any other plant.

In a preferred embodiment, the composition comprises a cysteine endopeptidase selected from the group consisting of papain (EC 3.4.22.2), caricain (3.4.22.30), chymopapain (EC 3.4.22.6), fruit bromelain (EC 3.4.22.33), stem bromelain (EC3.4.22.32) and ananain (EC 3.4.22.31). In a particularly preferred embodiment, the cysteine endopeptidase is papain (EC 3.4.22.2) or stem bromelain (EC 3.4.22.32).
A composition according to the invention comprises a virucidally effective amount of a cysteine endopeptidase. As used herein, virucidal means capable of inactivating or destroying a plant virus, in particular a Tobamovirus. In one embodiment, a composition according to the invention comprises at least 15 units/l of cysteine endopeptidase; wherein one unit is defined as releasing 1.0 µmole of p-nitrophenol from Nα-CBZ-L-lysine p-nitrophenyl ester per minute at pH 4.6 at 25 °C. In another embodiment, a composition comprises 75-15000 units/l cysteine protease. In yet another embodiment, a composition comprises 1500-75000 units/l cysteine protease.

Good results were obtained with compositions comprising approximately 2000-8000 units/l stem bromelain. Accordingly, in one embodiment, the composition comprises at least 2000 units/l of cysteine endopeptidase. In a preferred embodiment, a composition comprises at least 3000 units/l of cysteine endopeptidase, preferably a plant C1 cysteine endopeptidase, more preferably stem bromelain.

Compositions according to the invention also comprise a viricidally effective amount of an acid-dependent digestive protease selected from the acid-dependent aspartic endopeptidase(s) of the pepsin family (EC 3.4.23; pepsin-type protease). Aspartic endopeptidases generally have two highly conserved aspartates in their active site and their catalytic mechanism relies on water activation. Examples of aspartic endopeptidases have been identified in eukaryotes, including vertebrates, fungi and retroviruses. Eukaryotic aspartic endopeptidases include pepsins, cathepsins, renins.
A composition as herein disclosed comprises at least one aspartic endopeptidase of the pepsin family (EC 3.4.23). In one embodiment, the composition comprises a mixture of two or more acid-dependent digestive EC 3.4.23 proteases. In a preferred embodiment, the acid-dependent Preferably, the acid-dependent aspartic endopeptidase is pepsin (EC 3.4.23.1).

In a specific aspect, a composition comprises at least 10 units/l of acid-dependent class EC 3.4.23, preferably pepsin; wherein one unit is defined as change in A280 of 0.001 per minute at pH 2.0 at 37 °C, measured as trichloroacetic acid-soluble products using hemoglobin as a substrate (Final volume = 16 ml, light path = 1 cm). In another embodiment, a composition according to the invention comprises 100-4000 units/l of acid-dependent digestive pepsin(-type) protease. In yet another embodiment, a composition of the convention comprises 200-18900 units/l of acid-dependent digestive pepsin(-type) protease.

Good results were obtained with compositions comprising 1000-5000 units/l of pepsin. Accordingly, in one embodiment compositions of the invention comprise at least 1000 units/l of acid-dependent protease. In a preferred embodiment, the composition comprises at least 1500 units/l of acid-dependent protease, preferably pepsin.

As was found by the present inventors, acid-dependent pepsin (-type) proteases may perform better in the presence of a hydrochloric acid source. Accordingly, a composition according to the invention also comprises a hydrochloric acid source. More in particular, a composition comprises an organic hydrochloric acid source in the form of betaine hydrochloride. In one embodiment, a composition comprises at least 0.325 mM of hydrochloric acid source comprising betaine HCl. In another embodiment, a composition comprises 3.25-162.5 mM hydrochloric acid source comprising betaine HCl. In a third embodiment, a composition comprises 6.5-650 mM hydrochloric acid source comprising betaine HCl.

For example, good antiviral results were obtained with compositions comprising around 100 mM betaine HCl. Accordingly, in one embodiment a composition of the invention comprises at least 50 mM, preferably at least 65 mM, betaine hydrochloride or a mixture of betaine hydrochloride and glutamic acid hydrochloride

Sufficient hydrochloric acid source needs to be present relative to the acid-dependent pepsin(-type) protease. Accordingly, in one embodiment, a composition comprises 1 mmol hydrochloric acid source per 15-30 units acid-dependent protease. In a preferred embodiment, a composition comprises 1 mmol hydrochloric acid source per 20-25 units acid-dependent protease.

In another embodiment, the composition comprises 30-60 units of cysteine endopeptidase per 1 mmol betaine hydrochloric acid salt. For example, the composition comprises 40-50 units of cysteine endopeptidase per 1 mmol of betaine HCl.

In order for the enzymes to function properly, compositions according to the invention may have a pH in the acidic to mildly acidic pH range, e.g. pH 1-6.5 or in the range 2-5.

In one embodiment, the pH of the composition is between 2 and 6.5. In a preferred embodiment, the pH is between 2.2 and 5.8, preferably between 2.5 and 3.5. In another embodiment, the pH of the composition is between 3 and 6.5, preferably between 4.8 and 6.4.

In one embodiment, the pH of the composition is set by addition of a mild organic acid. In a preferred embodiment, the acid is selected from the group consisting of acetic acid, citric acid, formic acid, lactic acid, malic acid, oxalic acid and tartaric acid.

A composition according to the invention may comprise alcohol. Alcohol may disrupt the physical structure of cellular membranes, making them more easily penetrable. As such, alcohol may aid the uptake into plant cells of the acid-dependent protease, cysteine endopeptidase and/or the hydrochloric acid source.

Accordingly, in one embodiment, the invention provides a composition comprising at least 0.1% v/v alcohol. In an preferred embodiment, a composition comprises 0.1-10% v/v, preferably 0.5-5% v/v alcohol.

In another embodiment, a composition of the invention comprises 10-95% v/v alcohol. Preferably, a composition comprises 25-95% v/v alcohol and more preferably a composition comprises 60-95% v/v alcohol.

In preferred embodiments, the alcohol in the composition is a C1-C4 alcohol or a mixture thereof. In a more preferred embodiment, the alcohol is ethanol.

In certain embodiments, the viricidal composition of the invention is an alcohol-free composition. In a specific aspect, an (alcohol-free) composition of the invention comprises as further component a surface active ingredient, such as a soap. In one embodiment, the soap is a natural (organic) soap, preferably obtained by saponification of a vegetable oil.

The vegetable oil can be one containing more than 80% by weight of all fatty acids containing 12 to 18 carbon atoms. Specific examples include coconut oil, palm oil, olive oil, castor oil, grape seed oil, sunflower oil, avocado oil, hazelnut oil, evening primrose oil, rosehip oil, rice bran oil, sweet almond oil, canola oil, camellia oil, cottonseed oil, soybean oil, corn oil, sesame oil, wheat oil, and combinations thereof. In one embodiment, the composition comprises a soap obtained from saponification of olive oil, coconut oil and castor oil.

In one particular embodiment, the invention provides a composition having a pH between 2 and 6.5, preferably between 2.2 and 5.8; comprising one or more cysteine endopeptidases, one or more acid-dependent digestive pepsin-type proteases, betaine hydrochloride and 25-95% v/v alcohol. In a preferred embodiment, the alcohol concentration is in the range of 60-95%, ideally 70-80%, and preferably the alcohol is ethanol.

In another embodiment, the invention provides a composition having a pH between 3 and 6.5, preferably between 4.8 and 6.4, comprising one or more cysteine endopeptidases, one or more acid-dependent digestive pepsin-type proteases, betaine hydrochloride, and 0.1-5% v/v alcohol. Preferably, the alcohol is ethanol.

Still further, the invention provides an (alcohol-free) composition comprising one or more cysteine endopeptidases, one or more acid-dependent digestive pepsin-type proteases, betaine hydrochloride, and a surface active ingredient, preferably sodium lauryl sulfate and/or an organic soap, obtained by saponification of a vegetable oils.

Compositions according to the invention may reduce the number of infective viral particles independent of the carrier. Moreover, the compositions are mild and safe to use in a biological context as well as on materials susceptible to corrosion.

Accordingly, in one aspect, the invention provides a method to control, limit or prevent the spread of a plant virus by reducing a plant virus population on a surface. The surface may be any surface, object or part thereof that is known, prone, at risk or suspected to be, or to become, infected with one or more plant viruses, in particular a plant virus of the Tobamo family, like Tomato brown rugose fruit virus (ToBRFV) and similar viruses.

Such a method comprises the steps of contacting the surface with a composition as herein disclosed, and subsequently leaving the surface in contact with the composition for a set amount of time before, optionally, repeating both steps.

In one embodiment, the surface may be human skin. For instance, the surface may be a finger, hand and/or arm. In a preferred embodiment, human skin is contacted with a composition having a pH between 2 and 6.5 comprising one or more cysteine endopeptidases, one or more acid-dependent digestive pepsin(-type) proteases, the hydrochloric acid source and 25-95% v/v, preferably 60-95% v/v, alcohol. For toxicity reasons, the alcohol is preferably ethanol.

In order to limit or prevent skin irritation, it is preferred that a mild organic acid is used to set the pH of the composition to 2-6.5. Examples of suitable acids include acetic acid, citric acid, formic acid, lactic acid, malic acid, oxalic acid and tartaric acid. Most preferably, the composition for use e.g. as hand sanitizer, comprises citric acid.

In a particularly preferred embodiment, the composition is rubbed onto the human skin surface, for instance by putting a suitable amount into hands and rubbing these together. Preferably, the composition is subsequently left on the skin to dry. As the time the human skin surface is exposed to the composition in such a method is limited to below approximately 1-2 minutes, use of a more concentrated composition is preferred. For instance, a composition comprising at least 2000 units/l, preferably at least 3000 units/l, cysteine endopeptidase or a composition comprising at least 1000 units/l, preferably at least 1500 units/l acid-dependent digestive protease would be preferred.

In another embodiment, a surface to be treated with an anti-viral composition provided herein is part of a greenhouse structure. For example, the surface is a steel beam, a work bench or a glass plate. Other exemplary surfaces or objects to be treated include a tool or instrument, for instance a pair of secateurs or trimming shears, a spade or shovel or a rake. Suitable ways of contacting such a surface with the composition include spraying or sprinkling the composition onto a surface, misting the composition into a greenhouse, and/or dipping surfaces, particularly tools, into the composition.

In a preferred embodiment, a surface is contacted with a composition comprising between 0.1 and 5% v/v alcohol. More preferably, the alcohol concentration is 1-5% v/v, most preferably it is around 3.5% v/v.

In order to avoid issues with corrosion, in a preferred embodiment, the pH of the composition is in the range of 4-6.5, more preferably it is between 5.2 and 6.4, for instance 5.3, 5.4, 5.5, 5.7, 5.8, 5.9, 6.1 or 6.3. Preferably, the pH is set by a mild organic acid. In a particularly preferred embodiment, the pH is set by citric acid and/or oxalic acid.

In a still further embodiment, the surface is soil used for or intended for growing a plant. In another embodiment, the surface may be a plant or part thereof. For example, the surface is a stem, leaf, seed, fruit, flower, seedling or root. Plant surfaces may be contacted with the composition before harvesting. Alternatively, plant surfaces may be treated post-harvest. Contacting may involve spraying, sprinkling or misting a composition onto a plant surface or soil, dipping a plant or part thereof into a composition and/or mixing a composition into soil.

Alcohol may negatively impact plant development. Hence, a plant, seed or soil is typically contacted with a composition comprising up to about 5 v% alcohol. In a preferred embodiment, a plant surface or soil is contacted with a composition comprising 0.1-5 v%, preferably 0.1-2 v%, and most preferably around 0.7 v% alcohol. In a particularly preferred embodiment, the alcohol is ethanol.

Plants may also be sensitive to acidity. Accordingly, in a preferred embodiment, the pH of the composition is 4-6.5, more preferably 4.5-6.5 and most preferably the pH is in the range of 4.8-6.4, for instance 4.9, 5.1, 5.2, 5.3, 5.5, 5.7, 5.8, 6.0 or 6.1. In one embodiment, the pH of the composition is set by a mild organic acid. Preferably, citric acid is used to set the pH of the composition.
If so desired, and to optimize the anti-viral effect, surfaces other than human skin may be contacted with the composition for a prolonged period of time. For instance, a surface may be contacted with the composition for at least 15 minutes. In one embodiment, the treatment period is at least contacted for at least 30 minutes, e.g. 1-2 hours or longer. In one embodiment, the composition is subsequently left on the surface to dry. In another embodiment, the composition is subsequently rinsed off the surface, preferably with water.

The invention also provides a hand sanitizer composition which is suitably used to limit or avoid the spread of a plant virus. The hand sanitizer typically has a pH in the range of about 2.0 to 6.0, preferably between 2.2 and 5.8, like 2.7, 3.0, 3.5, 4.5 or 5.0. In a preferred embodiment, citric acid is used to set the pH of the hand sanitizer. It comprises a virucidally effective amount of one or more cysteine endopeptidases, one or more acid-dependent digestive proteases, betaine hydrochloric acid and 25-95% v/v, preferably 60-95% alcohol. For instance, a hand sanitizer comprising 1500-75000 units/l, preferably at least 3000 units/l, cysteine endopeptidase or a composition comprising 200-18900 units/l, preferably at least 3000 units/l acid-dependent digestive protease would be preferred. Preferably, the cysteine endopeptidase is stem bromelain or papain. Pepsin s a preferred acid-dependent digestive protease for use in the hand sanitizer. The alcohol in the hand sanitizer is preferably ethanol. Such a hand sanitizer is advantageously supplied in a suitable container which may optionally be fitted with a hand pump or other dosing device.
In another embodiment, the invention provides a greenhouse disinfectant composition having a pH between 2 and 6.5, preferably between 5.2 and 6.4, and comprising one or more cysteine endopeptidases, one or more acid-dependent digestive proteases, betaine hydrochloric acid and 25-95% v/v alcohol. This composition is advantageously used as stock solution to be diluted with water (tap water, rain water) prior to use. For example, the greenhouse disinfectant stock solution is diluted up to 100- or 200-fold. In one aspect, it is diluted in the range of 1:5-1: 100, preferably in the range 1:10- 1:50, with water. The greenhouse disinfectant (stock) solution comprises cysteine endopeptidases and acid-dependent proteases to a concentration sufficient to be virucidal upon suitable dilution. For example, greenhouse disinfectant stock solutions comprising 1500-75000 units/l, preferably at least 3000 units/l, cysteine endopeptidase or a composition comprising 200-18900 units/l, preferably at least 3000 units/l acid-dependent digestive protease is preferred. A greenhouse disinfectant (stock) solution is typically supplied in a suitable container which may optionally include instructions for storage, dilution and use as virucidal agent.
In a still further embodiment, the invention provides a soil, seed and/or plant disinfectant in the form of a composition having a pH between 2 and 6.5, preferably between 4.8 and 6.4, and comprising one or more cysteine endopeptidases, one or more acid-dependent digestive proteases, a hydrochloric acid source and 25-95% v/v alcohol, for suitable dilution in water. In one embodiment, the soil, seed and plant disinfectant is diluted in the range of 1:50 to 1:200, preferably 1:75 to 1:150, in water. The soil, seed and plant disinfectant comprises cysteine endopeptidases and acid-dependent proteases to a concentration sufficient to be virucidal upon suitable dilution. For instance, soil, seed and/or plant disinfectant solutions comprising 1500-75000 units/l, preferably at least 3000 units/l, cysteine endopeptidase, preferably papain or stem bromelain, are preferred. As another example, the composition comprises 200-18900 units/l, preferably at least 3000 units/l acid-dependent digestive protease, preferably pepsin. In a particularly preferred embodiment, if present, the alcohol in the soil, seed and plant disinfectant is ethanol. In another particularly preferred embodiment, citric acid is used to set the pH of the soil, seed and plant disinfectant. A soil, seed and/or plant disinfectant of the invention is advantageously comprised in a suitable container, which may optionally include instructions for storage and use.

A composition for use according to the invention may be suitably prepared by first dissolving an acid in water to obtain the desired acidity, followed by dissolving the desired amounts of cysteine endopeptidase, acid-dependent protease and betaine hydrochloric acid are dissolved into the acidified water. Subsequently, alcohol is added to the desired v/v ratio.

A composition according to the invention may be prepared as a concentrated stock solution. In one embodiment, it is prepared as a concentrated stock for dilution in the range of 5-200 fold. In another embodiment, a composition according to the invention is prepared as a concentrated stock solution for 10-25 fold dilution. Such a stock composition comprise the enzymes in concentrations sufficient to be virucidal upon dilution. For example, a stock composition for 5-200 fold dilution in water may comprise 1500-75000 units/l cysteine endopeptidase. As another example, such a stock composition comprise 200-18900 units/l acid-dependent digestive protease.

In one embodiment, a composition according to the invention may be formulated as a concentrated stock for dilution with water, wherein the water may be demi-water, tap water or rain water. In another embodiment, a composition of the invention may be formulated for dilution with a water-alcohol mixture of the desired v/v ratio.

### EXPERIMENTAL SECTION

### Example 1: Concentrated antiviral stock compositions.

A stock composition can be prepared by dissolving the desired amount of acid in water until the desired pH (e.g. in the range of 1.5 to 5) is obtained Subsequently, the desired amounts of the cysteine endopeptidase(s), the betaine or glutamic acid hydrochloride (the glutamic acid hydrochloride solutions are not part of the invention) and the acid-dependent pepsin-type protease(s) are dissolved in the acidified water. To this solution, a desired amount of ethanol may be slowly added. See Table 1 for suitable amounts of each component in the antiviral composition.

**Table 1. Exemplary antiviral stock compositions.**

| **Ingredient** | **Stock A** | **Stock B** | **Stock C** | **Stock D** | **Stock E** |
|---|---|---|---|---|---|
| **Papain EC 3.4.22.2 (g)** | 4 | 2 | | | |
| **Bromelain EC 3.4.22.32 (g)** | | | 2 | 2 | 2 |
| **Betaine HCl (g)** | 20 | 20 | 20 | | 20 |
| **Glutamic acid HCl (g)** | | | | 27 | |
| **Pepsin EC 3.4.23.1 (g)** | 3.7 | 3.7 | 3.7 | 3.7 | 3.7 |
| **Citric Acid (g)** | 20 | 20 | 20 | 20 | 20 |
| **Ethanol (ml)** | 700 | 700 | 700 | 700 | 800 |
| **Water (ml)** | 300 | 300 | 300 | 300 | 200 |

Papain EC 3.4.22.2 (product number P4762), stem bromelain EC 3.4.22.32 (product number B4882), and pepsin EC 3.4.23.1 (product number P0525000) were obtained from Sigma Aldrich. The stem bromelain has an activity of at least 3 units/mg protein, wherein a unit is defined as releasing 1.0 µmole of p-nitrophenol from Nα-CBZ-L-lysine p-nitrophenyl ester per minute at pH 4.6 at 25 °C. The pepsin has an activity of 1 unit/mg, wherein a unit is defined as producing a change in A280 of 0.001 per minute at pH 2.0 at 37 °C, measured as trichloroacetic acid-soluble products using hemoglobin as a substrate (Final volume = 16 ml, light path = 1 cm).

For use as a hand sanitizer, hands may be rubbed with undiluted stock solutions as exemplified in Table 1 and left to dry. For better efficacy, this step may be repeated.

For use as a greenhouse disinfectant, stock solutions as exemplified in Table 1 may be diluted e.g. between about 1:10 to about 1:50 by volume, ideally approximately 1:20 by volume, in water, for instance tap water or rain water. The diluted composition is readily sprayed around the greenhouse and left wet for e.g. 30-60 minutes. Preferably, this step is repeated.

For use as a soil, seed or plant disinfectant, stock solutions such as those of Table 1 is suitably diluted with water in a volume ratio of between 1:50 and 1:200, ideally around 1:100. The diluted composition may be mixed into the soil, sprayed onto plants or parts thereof such as fruit or seeds, and/or or plants or parts thereof may be dipped into the diluted composition.

### Example 2: Inhibition of Tomato brown rugose fruit virus infection

Plant juice from Tomato brown rugose fruit virus (ToBRFV)-infected tomato plants was deposited onto glass slides and dried for 24 hours. Upon drying, the slides were sprayed with a 1:2 (v/v) dilution of Stock solution C (Example 1, Table 1) and left to incubate for 5, 15, 30 or 60 minutes at room temperature.

Subsequently, swabs were taken with a moist cotton bud and spread onto the leaves (12 per test condition) of tobacco plants. Tobacco plants are relatively sensitive for infection by a virus, and they are therefore commonly used as assay system for studying plant virus disease and evaluating virucidal agents or compositions.
As a positive control, swabs of untreated dried infected juice were similarly spread onto tobacco plant leaves (6 per test condition). Non-infected plant juice material was spread onto tobacco plant leaves as a negative control. After 5 days, the number of lesions on the inoculated plant leaves was counted. The results are summarized in Table 2.

**Table 2. Plant leave inoculation experiment showing decrease of number of infectious viruses upon incubation with antiviral solution C.**

| **Treatment** | **Average number of lesions per leaf** |
|---|---|
| Negative control | 0 |
| Positive control | 250 |
| Stock C 1:2 dil, 5 min. incubation | 54 |
| Stock C 1:2 dil, 15 min. incubation | 47 |
| Stock C 1:2 dil, 30 min. incubation | 37 |
| Stock C 1:2 dil, 60 min. incubation | 2 |
| Stock C, 5 min. incubation | 0.4 |
| Stock C, 15 min. incubation | 0.5 |
| Stock C, 30 min. incubation | 0.08 |
| Stock C, 60 min. incubation | 0 |

The results show that incubation with the antiviral stock solution C, even at 1:2 dilution and for only 5 minutes, significantly reduces the number of lesions on inoculated plant leaves. Incubation with undiluted antiviral stock solution C reduced the number of lesions to even less than one per inoculated plant leaf on average. The efficacy of the solution at either concentration was further enhanced by incubating for longer periods. Notably, upon a 60 minute incubation with antiviral stock solution C, no lesions were observed on inoculated plant leaves, indicating that the composition can effectively eradicate all infective ToBRFV viruses.

### Example 3: Virucidal activity requires a source of hydrochloric acid and an aspartic endopeptidase.

This example demonstrates the relevance of both a hydrochloride acid source and an aspartic endopeptidases of the pepsin family (EC 3.4.23) are for obtaining the desired viricidal effect.

The performance of a 1:2 (v/v) dilution of Stock solution C (sample 4; see Examples 1 and 2) was compared to that of a comparative test composition lacking either betaine HCl (sample 5) or the pepsin protease (sample 6). To that end, plant juice from ToBRFV-infected tomato plants was deposited onto glass slides and dried for 24 hours. Upon drying, the slides were sprayed with the different test compositions, and left to incubate for 60 minutes at room temperature. Swabs were taken with a moist cotton bud and spread onto the leaves (18 per test condition) of tobacco plants. As controls, swabs of water (sample 1), infected juice T=0 (sample 2), or infected juice after 24h drying (sample 3), were similarly spread onto tobacco plant leaves (4 leaves for each condition). After 5 days, the number of lesions on the inoculated plant leaves was counted. The results are shown in Table 3.

**Table 3**

| | | Total number of lesions per treatment | Average number of lesions per plant | Average number of lesions per leaf |
|---|---|---|---|---|
| Sample | | | | |
| 1 | Water (control) | 0 | 0 | 0 |
| 2 | Juice T=0 (control) | >3000 | >750 | >250 |
| 3 | Juice 24h (control) | >3000 | >750 | >250 |
| | | | | |
| 4 | Test composition C complete | 0 | 0 | 0 |
| 5 | Test composition C minus Betaine HCl | 44 | 7.3 | 2.4 |
| 6 | Test composition C minus Pepsin | 11 | 1.8 | 0.6 |

The data confirm the viricidal efficacy of the complete composition of the invention (sample 4). Furthermore, the remaining number of lesions on the plants that were treated with either a test composition lacking a source of hydrochloric acid (sample 5) or pepsin (sample 6) indicate that both ingredients contribute to the protective effect.

### Example 4: Alcohol-free virucidal compositions

This example exemplifies alcohol-free virucidal compositions of the invention, and demonstrates its capacity to prevent tomato plant infection by ToBRFV. Test compositions according to the recipe of Table 4 were prepared.

**Table 4: Alcohol-free virucidal compositions**

| **Ingredient** | **Stock F** | **Stock G** | **Stock H** | **Stock I** | **Stock J** |
|---|---|---|---|---|---|
| **Papain EC 3.4.22.2 (g)** | 4 | | | | |
| **Bromelain EC 3.4.22.32 (g)** | | 2.7 | 3 | 3 | 3 |
| **Betaine HCl (g)** | 25 | 22.5 | 25 | | 25 |
| **Glutamic acid HCl (g)** | | | | 27 | |
| **Pepsin EC 3.4.23.1 (g)** | 4 | 4 | 4 | 4 | 4 |
| **Citric Acid (g)** | 15 | 15 | 15 | 15 | 15 |
| **Natural Soap (ml)** | 15 | 15 | 15 | 15 | 15 |
| **Water (ml)** | 985 | 985 | 985 | 985 | 985 |

Representative test compositions "G" and "H" were tested in an efficacy trial using a ToBRFV inoculum. Composition "G" was used in a 1:20 (v/v) dilution in water (series E). Composition "H" was used either as a stock solution (series C) or in a 1:20 (v/v) dilution in water (series F). Water was included as a negative control (series D).

Plant juice from Tomato brown rugose fruit virus (ToBRFV)-infected tomato plants was deposited onto glass slides and dried for 24 hours at about 20-22°C. After drying, the slides were sprayed with test composition until the product was running, and left to incubate for the indicate time period.

Subsequently, swabs were taken with a moist cotton swab and spread onto the leaves (12 per test condition) of tomato plants (variety Money Maker) by touching/rubbing the surface of 3 leaves per plant.

As a positive control, swabs of untreated dried infected juice were similarly spread onto tomato plant leaves (6 per test condition). Non-infected plant juice material was spread onto tomato plant leaves as a negative control.

Also included in this test set-up was the alcohol-containing test composition C (see herein above) either as a stock solution (series A) or in a 1:15 (v/v) dilution in water (series B).

After 19 days of inoculation, the number of lesions on the plant leaves was scored on an infection scale of 1-3 (1 = healthy plant, 2= plant with mild/delayed symptoms, 3 =plant with strong symptoms). The results are summarized in Table 5.

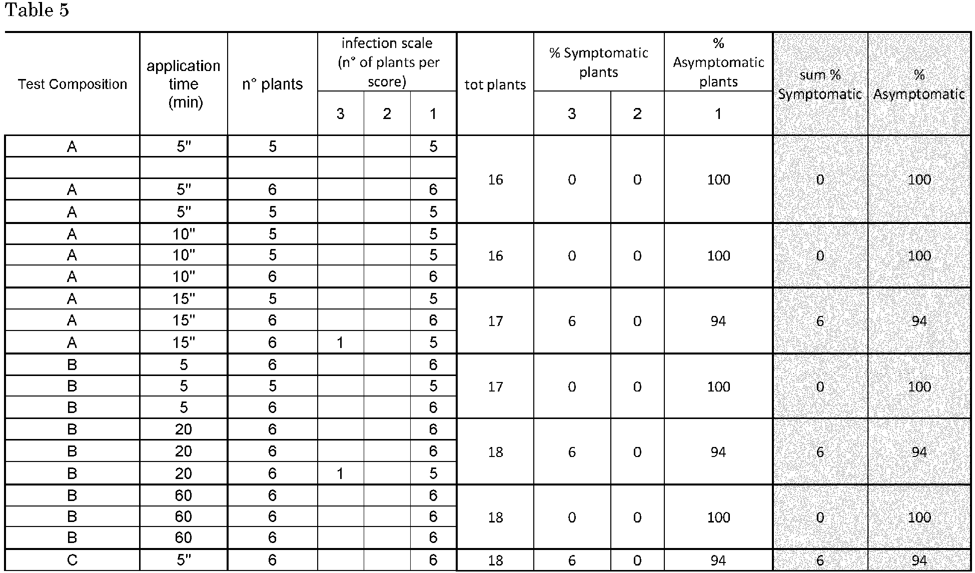

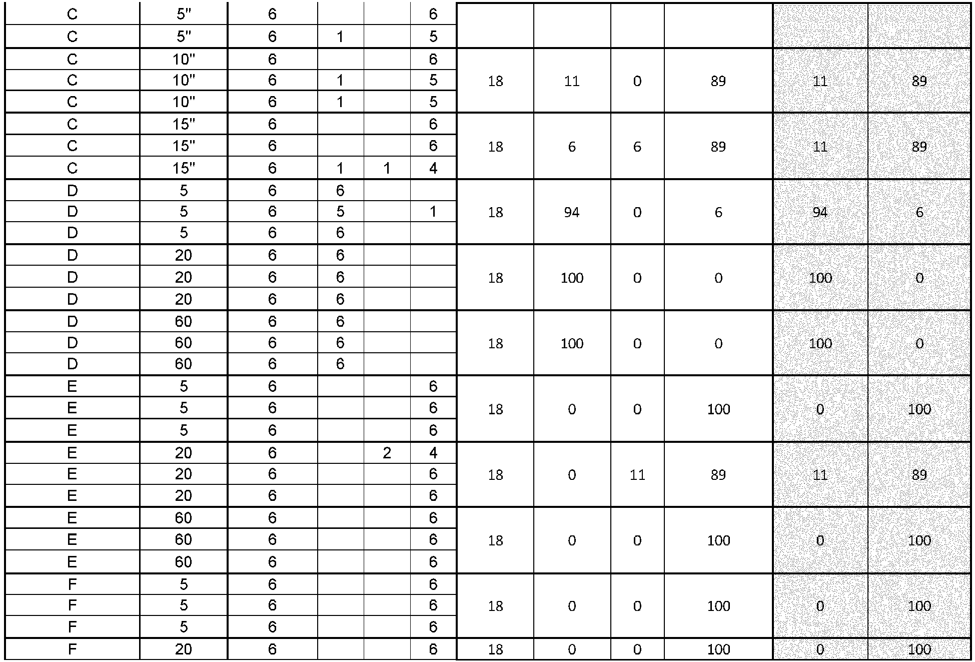

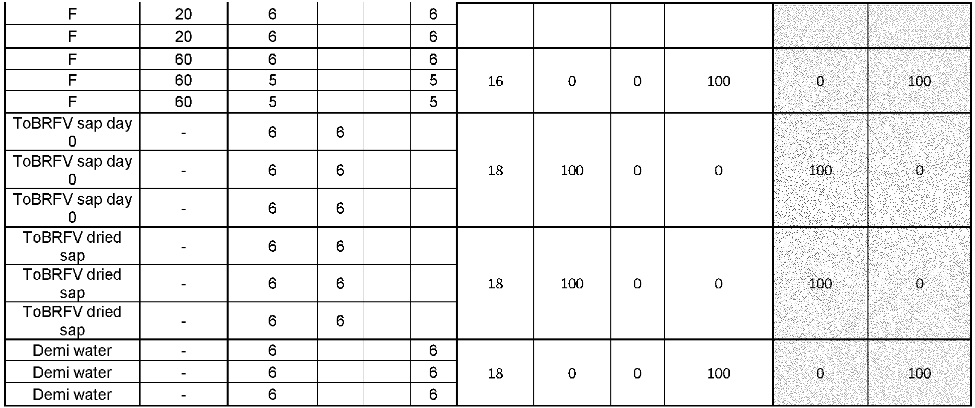

## Claims

1. An aqueous composition comprising
i) one or more cysteine endopeptidase(s),
ii) one or more acid-dependent digestive protease(s) selected from the aspartic endopeptidases of the pepsin family (EC 3.4.23), and
iii) betaine hydrochloride.

2. The composition of claim 1, comprising one or more cysteine endopeptidase(s) selected from the group consisting of papain (EC 3.4.22.2), caricain (3.4.22.30), chymopapain (EC 3.4.22.6), fruit bromelain (EC 3.4.22.33), stem bromelain (EC3.4.22.32) and ananain (EC 3.4.22.31), or any combination thereof, preferably comprising stem bromelain (EC 3.4.22.32).

3. The composition according to claim 1 or 2, comprising pepsin (EC 3.4.23.1).

4. The composition according to any one of claims 1-3, comprising stem bromelain (EC 3.4.22.32), pepsin (EC 3.4.23.1) and betaine HCl.

5. The composition according to any one of the preceding claims, comprising at least 15 units/l of cysteine endopeptidase and/or comprising at least 10 units/l of acid-dependent digestive protease of the pepsin family.

6. The composition according to any one of the preceding claims, wherein the pH of the composition is set to between 2 and 6.5 by addition of a mild organic acid, preferably wherein the acid is selected from the group consisting of acetic acid, citric acid, formic acid, lactic acid, malic acid, oxalic acid and tartaric acid.

7. The composition according to any one of the preceding claims, further comprising an alcohol in the concentration of 0.1-95% v/v, preferably wherein the alcohol concentration is 25-95% v/v or 0.1-5% v/v, more preferably wherein the alcohol comprises a C1-C4 alcohol or a mixture thereof.

8. A composition according to any one of the preceding claims, comprising
i) one or more cysteine endopeptidase(s);
ii) one or more acid-dependent digestive protease(s) selected from the aspartic endopeptidases of the pepsin family (EC 3.4.23);
iii) betaine hydrochloride ,
and further
iv) comprising 25-95% v/v, preferably 60-95%, alcohol; and
v) having a pH between 2 and 6.5;
or
iv) comprising 0.1-5% v/v alcohol; and
v) having a pH between 4.5 and 6.5;
or
iv) comprising a surface active ingredient, preferably an organic soap.

9. A container comprising a composition according to any one of claims 1-8, preferably wherein the container is fitted with a dispensing system.

10. A non-therapeutic method to reduce a plant virus population on a surface, preferably wherein the plant virus is a Tobamovirus, more preferably wherein the Tobamovirus is Tomato Brown Rugose Fruit Virus, Pepper Mild Mottle Virus or Cucumber Green Mottle Mosaic Virus, comprising the steps of:
i) contacting the surface with a composition according to any one of claims 1-8, followed by
ii) leaving the surface in contact with the composition for a period of time; and optionally
iii) repeating steps i) and ii).

11. The method according to claim 10, wherein the plant is a crop plant, preferably wherein the plant is a tomato plant, pepper plant or cucumber plant.

12. The method according to claim 10, wherein the surface is human skin.

13. The method according to any one of claims 10-12, wherein the composition is rubbed onto the surface and left to dry.

14. The method according to claim 10, 11 or 13, wherein the surface is part of a greenhouse structure, preferably a steel beam, a work bench or a glass plate, or wherein the surface is soil, a plant or plant part, preferably a stem, leaf, seed, fruit, flower, seedling or root; either pre- or post-harvest.

15. The use of a composition according to any one of claims 1-8 to prevent, control or treat a plant disease caused by a plant virus, and/ or to prevent, control or limit the spread of a plant disease caused by a plant virus, preferably wherein the plant virus is a Tobamovirus, more preferably wherein the Tobamovirus is Tomato Brown Rugose Fruit Virus, Pepper Mild Mottle Virus or Cucumber Green Mottle Mosaic Virus.

16. Use according to claim 15, wherein the plant is a crop plant, preferably wherein the plant is a tomato plant, pepper plant or cucumber plant.

17. The use of a composition according to any one of claims 1-8, as a ready-to-use hand sanitizer composition, a greenhouse disinfectant stock composition, or as a soil, seed and/or plant disinfectant composition.

## Patentansprüche

1. Wässrige Zusammensetzung, umfassend
i) eine oder mehrere Cystein-Endopeptidase(n),
ii) eine oder mehrere säureabhängige Verdauungsprotease(n),
ausgewählt aus den asparaginischen Endopeptidasen der Pepsinfamilie (EC 3.4.23), und
iii) Betainhydrochlorid.

2. Zusammensetzung nach Anspruch 1, umfassend eine oder mehrere Cystein-Endopeptidase(n), ausgewählt aus der Gruppe bestehend aus Papain (EC 3.4.22.2), Caricain (3.4.22.30), Chymopapain (EC 3.4.22.6), Fruchtbromelain (EC 3.4.22.33), Stamm-Bromelain (EC 3.4.22.32) und Ananain (EC 3.4.22.31) oder einer beliebigen Kombination davon, vorzugsweise umfassend Stamm-Bromelain (EC 3.4.22.32).

3. Zusammensetzung nach Anspruch 1 oder 2, umfassend Pepsin (EC 3.4.23.1).

4. Zusammensetzung nach einem der Ansprüche 1 bis 3, umfassend Stamm-Bromelain (EC 3.4.22.32), Pepsin (EC 3.4.23.1) und Betain-HCI.

5. Zusammensetzung nach einem der vorhergehenden Ansprüche, umfassend mindestens 15 Einheiten/l Cystein-Endopeptidase und/oder umfassend mindestens 10 Einheiten/l säureabhängige Verdauungsprotease aus der Pepsinfamilie.

6. Zusammensetzung nach einem der vorhergehenden Ansprüche, wobei der pH-Wert der Zusammensetzung durch Zugabe einer milden organischen Säure auf einen Wert zwischen 2 und 6,5 eingestellt wird, wobei die Säure vorzugsweise ausgewählt ist aus der Gruppe bestehend aus Essigsäure, Zitronensäure, Ameisensäure, Milchsäure, Apfelsäure, Oxalsäure und Weinsäure.

7. Zusammensetzung nach einem der vorhergehenden Ansprüche, ferner umfassend einen Alkohol in der Konzentration von 0,1-95 % v/v, vorzugsweise wobei die Alkoholkonzentration 25-95 % v/v oder 0,1-5 % v/v ist, wobei bevorzugter der Alkohol einen C1-C4-Alkohol oder eine Mischung davon umfasst.

8. Zusammensetzung nach einem der vorangegangenen Ansprüche, umfassend
i) eine oder mehrere Cystein-Endopeptidase(n),
ii) eine oder mehrere säureabhängige Verdauungsprotease(n), ausgewählt aus den asparaginischen Endopeptidasen der Pepsinfamilie (EC 3.4.23);
iii) Betainhydrochlorid,
und ferner
iv) umfassend 25-95% v/v, vorzugsweise 60-95%, Alkohol; und
v) mit einem pH-Wert zwischen 2 und 6,5;
oder
iv) umfassend 0,1-5% v/v Alkohol; und
v) mit einem pH-Wert zwischen 4,5 und 6,5;
oder
iv) umfassend einen oberflächenaktiven Inhaltsstoff, vorzugsweise eine organische Seife.

9. Behälter, umfassend eine Zusammensetzung nach einem der Ansprüche 1 bis 8 , wobei der Behälter vorzugsweise mit einem Abgabesystem ausgestattet ist.

10. Nicht-therapeutisches Verfahren zur Verringerung einer Pflanzenviruspopulation auf einer Oberfläche, wobei das Pflanzenvirus vorzugsweise ein Tobamovirus ist, wobei das Tobamovirus bevorzugter ein Tomate Brown Rugose Fruit Virus, Pepper Mild Mottle Virus oder Cucumber Green Mottle Mosaic Virus ist, umfassend die Schritte von:
i) Inkontaktbringen der Oberfläche mit einer Zusammensetzung nach einem der Ansprüche 1 bis 8, gefolgt von
ii) Belassen der Oberfläche in Kontakt mit der Zusammensetzung für eine gewisse Zeit; und optional
iii) Wiederholen der Schritte i) und ii).

11. Verfahren nach Anspruch 10, wobei die Pflanze eine Kulturpflanze ist, vorzugsweise eine Tomaten-, Paprika- oder Gurkenpflanze.

12. Verfahren nach Anspruch 10, wobei die Oberfläche menschliche Haut ist.

13. Verfahren nach einem der Ansprüche 10 bis 12, wobei die Zusammensetzung auf die Oberfläche gerieben und trocknen gelassen wird.

14. Verfahren nach Anspruch 10, 11 oder 13, wobei die Oberfläche Teil einer Gewächshausstruktur ist, vorzugsweise ein Stahlträger, eine Werkbank oder eine Glasplatte, oder wobei die Oberfläche Erde, eine Pflanze oder ein Pflanzenteil ist, vorzugsweise ein Stängel, ein Blatt, ein Samen, eine Frucht, eine Blüte, ein Sämling oder eine Wurzel; entweder vor oder nach der Ernte.

15. Verwendung einer Zusammensetzung nach einem der Ansprüche 1 bis 8 zur Vorbeugung, Kontrolle oder Behandlung einer durch ein Pflanzenvirus verursachten Pflanzenkrankheit und/oder zur Vorbeugung, Kontrolle oder Begrenzung der Ausbreitung einer durch ein Pflanzenvirus verursachten Pflanzenkrankheit, wobei das Pflanzenvirus vorzugsweise ein Tobamovirus ist, bevorzugter, wobei das Tobamovirus ein Tomate Brown Rugose Fruit Virus, Pepper Mild Mottle Virus oder Cucumber Green Mottle Mosaic Virus ist.

16. Verwendung nach Anspruch 15, wobei die Pflanze eine Kulturpflanze ist, vorzugsweise eine Tomaten-, Paprika- oder Gurkenpflanze.

17. Verwendung einer Zusammensetzung nach einem der Ansprüche 1 bis 8 als gebrauchsfertige Handdesinfektionsmittelzusammensetzung, als Gewächshausdesinfektionsmittelstammzusammensetzung oder als Boden-, Saatgut- und/oder Pflanzendesinfektionsmittelzusammensetzung.

## Revendications

1. Composition aqueuse comprenant
i) une ou plusieurs endopeptidases à cystéine,
ii) une ou plusieurs protéases digestives dépendantes d'acide sélectionnées parmi les endopeptidases aspartiques de la famille des pepsines (EC 3.4.23), et
iii) du chlorhydrate de bétaïne.

2. Composition selon la revendication 1, comprenant une ou plusieurs endopeptidases à cystéine sélectionnées parmi le groupe constitué de papaïne (EC 3.4.22.2), caricaïne (3.4.22.30), chymopapaïne (EC 3.4.22.6), bromélaïne issue de fruit (EC 3.4.22.33), bromélaïne issue de tige (EC3.4.22.32) et ananaïne (EC 3.4.22.31), ou toute combinaison de celles-ci, comprenant de préférence de la bromélaïne issue de tige (EC 3.4.22.32).

3. Composition selon la revendication 1 ou 2, comprenant de la pepsine (EC 3.4.23.1).

4. Composition selon l'une quelconque des revendications 1 à 3, comprenant de la bromélaïne issue de tige (EC 3.4.22.32), de la pepsine (EC 3.4.23.1) et de la bétaïne HCI.

5. Composition selon l'une quelconque des revendications précédentes, comprenant au moins 15 unités/l d'endopeptidase à cystéine et/ou comprenant au moins 10 unités/l de protéase digestive dépendante d'acide de la famille des pepsines.

6. Composition selon l'une quelconque des revendications précédentes, dans laquelle le pH de la composition est réglé entre 2 et 6,5 par ajout d'un acide organique modéré, de préférence dans laquelle l'acide est sélectionné dans le groupe consistant en acide acétique, acide citrique, acide formique, acide lactique, acide malique, acide oxalique et acide tartrique.

7. Composition selon l'une quelconque des revendications précédentes, comprenant en outre un alcool selon la concentration de 0,1 à 95 % v/v, de préférence dans laquelle la concentration en alcool est de 25 à 95 % v/v ou de 0,1 à 5 % v/v, plus préférablement dans laquelle l'alcool comprend un C1-C4 alcool ou un mélange de celui-ci.

8. Composition selon l'une quelconque des revendications précédentes, comprenant
i) une ou plusieurs endopeptidases à cystéine ;
ii) une ou plusieurs protéases digestives dépendantes d'acide sélectionnées parmi les endopeptidases aspartiques de la famille des pepsines (EC 3.4.23) ;
iii) du chlorhydrate de bétaïne,
et en outre
iv) comprenant 25 à 95 % v/v, de préférence 60 à 95 %, d'alcool ; et
v) ayant un pH compris entre 2 et 6,5 ;
ou
iv) comprenant 0,1 à 5 % d'alcool v/v ; et
v) ayant un pH compris entre 4,5 et 6,5 ;
ou
iv) comprenant un ingrédient tensioactif, de préférence un savon organique.

9. Récipient comprenant une composition selon l'une quelconque des revendications 1 à 8, de préférence dans lequel le récipient est équipé d'un système de distribution.

10. Méthode non thérapeutique de réduction d'une population de virus végétal sur une surface, de préférence dans laquelle le virus végétal est un tobamovirus, plus préférablement dans laquelle le tobamovirus est un virus du fruit rugueux de la tomate brune, un virus de la marbrure légère du piment ou un virus de la mosaïque marbrée verte du concombre, comprenant les étapes suivantes :
i) la mise en contact de la surface avec une composition selon l'une quelconque des revendications 1 à 8, suivie de
ii) la poursuite du contact de la surface avec la composition pendant une période de temps ; et facultativement
iii) la répétition des étapes i) et ii).

11. Méthode selon la revendication 10, dans laquelle le plant est un plant de culture, de préférence dans laquelle le plant est un plant de tomate, un plant de poivre ou un plant de concombre.

12. Méthode selon la revendication 10, dans laquelle la surface est de la peau humaine.

13. Méthode selon l'une quelconque des revendications 10 à 12, dans laquelle la composition est frottée sur la surface et laissée sécher.

14. Méthode selon la revendication 10, 11 ou 13, dans laquelle la surface fait partie d'une structure de serre, de préférence une poutre en acier, un établi ou une plaque en verre, ou dans laquelle la surface est de la terre, un plant ou une partie de plant, de préférence une tige, feuille, semence, fruit, fleur, semis ou racine ; soit avant, soit après récolte.

15. Utilisation d'une composition selon l'une quelconque des revendications 1 à 8 pour prévenir, réguler ou traiter une maladie végétale causée par un virus végétal, et/ou pour prévenir, réguler ou limiter la propagation d'une maladie végétale causée par un virus végétal, de préférence dans laquelle le virus végétal est un tobamovirus, plus préférablement dans laquelle le tobamovirus est un virus du fruit rugueux de la tomate brune, un virus de la marbrure légère du piment ou un virus de la mosaïque marbrée verte du concombre.

16. Utilisation selon la revendication 15, dans laquelle le plant est un plant de culture, de préférence dans laquelle le plant est un plant de tomate, un plant de poivre ou un plant de concombre.

17. Utilisation d'une composition selon l'une quelconque des revendications 1 à 8, en tant que composition de désinfection des mains prête à l'emploi, composition de stock désinfectante pour serres, ou en tant que composition désinfectante pour sol, semence et/ou plant.
